# EUROPEAN PATENT APPLICATION

(11) **EP 4 654 009 A1**
(43) Date of publication of application: **26.11.2025**
(21) Application number: 25153668.6
(22) Date of filing: 23.01.2025
(51) Int. Cl.: G06F 9/445

(54) **METHOD FOR RUNNING APPLICATION PROGRAM, ELECTRONIC DEVICE AND STORAGE MEDIUM**

(30) Priority: 23.05.2024 CN 202410649822
(71) Applicant: Beijing Xiaomi Mobile Software Co., Ltd., Beijing 100085 (CN)
(72) Inventor: ZHENG, Xiaohui, Beijing (CN); ZHUANG, Xudong, Beijing (CN); CHEN, Long, Beijing 100085 (CN)
(74) Representative: Dehns Germany Partnerschaft mbB

(57) **Abstract**

A method for running an application program, an electronic device (1300) and a storage medium are provided. The method for running the application program includes: determining (S101) an application window type of each of a plurality of application programs currently run by an electronic device, in which the application window type is configured to represent an importance degree of the application program; determining (S 102) a target resource of the application program according to the application window type of the application program; and running (S103) the application program according to the target resource of the application program.

## Description

### FIELD

The present invention relates to a technical field of terminals, and more particularly to a method for running an application program, an electronic device and a storage medium.

### BACKGROUND

With the continuous development of the terminal technology, the types of the application programs are more and more abundant, and the users demand more and more scenarios for the application programs. With the continuous popularization of the large-screen terminal devices, there are complex scenarios in which the application programs are run simultaneously in the foreground, except the scenarios in which the application programs are run simultaneously in the foreground and the background. However, there will be a resource competition among the application programs run simultaneously, which will lead to the lag of the application programs and affect the user experience.

### SUMMARY

In order to overcome the problems existing in the related art, the present invention provides a method for running an application program, an electronic device and a storage medium.

According to a first aspect of the present invention, there is provided a method for running an application program, which includes: determining an application window type of each of a plurality of application programs currently run by an electronic device, in which the application window type is configured to represent an importance degree of the application program; determining a target resource of the application program according to the application window type of the application program; and running the application program according to the target resource of the application program.

Optionally, determining the target resource of the application program according to the application window type includes: acquiring a traffic parameter of each of the plurality of application programs; determining a priority of the application program according to the traffic parameter and the application window type; and determining the target resource of the application program according to the priority of the application program.

Optionally, determining the priority of the application program according to the traffic parameter and the application window type includes: determining a key business in the application program as a first priority and a non-key business in the application program as a second priority, in a case that the application window type is a focus window; determining all businesses in the application program as the second priority, in a case that the application window type is a non-focus window and the traffic parameter is less than a traffic threshold; determining the key business in the application program as a third priority and the non-key business in the application program as a fourth priority, in a case that the application window type is a background window and the traffic parameter is less than the traffic threshold; and determining all businesses in the application program as the fourth priority, in a case that the application window type is the non-focus window or the background window, and the traffic parameter is greater than or equal to the traffic threshold.

Optionally, determining the target resource of the application program according to the priority of the application program includes: determining a data packet processing priority of the application program and/or a target network rate of the application program according to the priority of the application program. The higher the priority of the application program, the higher the data packet processing priority of the application program and/or the target network rate of the application program.

Optionally, determining the target resource of the application program according to the priority of the application program includes: preloading data in the application program, in a case that the application program is a video application program and the priority of the application program is a high priority.

Optionally, determining the target resource of the application program according to the application window type of the application program includes: determining a target display parameter of the application program according to the application window type. The target display parameter includes at least one of a frame rate and a resolution.

Optionally, determining the target display parameter of the application program according to the application window type includes: determining the target display parameter as a first display parameter in a case that the application window type is a focus window; determining the target display parameter as a second display parameter in a case that the application window type is a non-focus window; and determining the target display parameter as a third display parameter in a case that the application window type is a background window. The first display parameter, the second display parameter and the third display parameter decrease in sequence.

Optionally, determining the application window type of each of the plurality of application programs currently run by the electronic device includes: determining the application window type of the application program according to an application window region of the application program, in a case that the application program is run in the foreground; and determining the application window type of the application program as a background window, in a case that the application program is run in the background.

Optionally, determining the application window type of the application program according to the application window region of the application program includes: determining that the application window type of the application program as a non-focus window, in a case that the application window region of the application program is less than a first threshold; and determining the application window type of the application program according to a correlation degree among the plurality of application programs, in a case that the application window region of the application program is equal to or greater than the first threshold.

Optionally, length and width dimensions of the application window region are determined by reading coordinate information of vertices of the application window region in a display screen, and an area of the application window region is determined. In a case that the area of the application window region is less than the first threshold, the application window type of the application program is determined as the non-focus window. In a case that the area of the application window region is equal to or greater than the first threshold value, the application window type of the application program is determined according to the correlation degree among the plurality of application programs.

Optionally, determining the application window type of the application program according to the correlation degree among the plurality of the application programs includes: in a case that a correlation degree between a first application program and a second application program is greater than a second threshold, determining an application window type of the first application program as a focus window and an application window type of the second application program as a non-focus window; and in a case that the correlation degree between the first application program and the second application program is less than or equal to the second threshold, determining the application window type of the application program according to a usage rate and a window coverage rate of the application program. The window coverage rate represents a ratio of a covered portion of the application window region to the application window region.

Optionally, wherein historical usage data of the application programs are obtained, and the correlation degree among the plurality of application programs are determined according to the historical usage data and a preset correlation degree prediction algorithm.

Optionally, determining the application window type of the application program according to the usage rate and the window coverage rate of the application program includes: determining the application window type of the application program as the focus window, in a case that the usage rate and the window coverage rate of the application program meet a first condition; and determining the application window type of the application program as the non-focus window, in a case that the usage rate and the window coverage rate of the application program meet a second condition.

According to a second aspect of the present invention, there is provided an electronic device, which includes: a processor; and a memory for storing instructions executable by the processor. The processor is configured to perform the method according to the first aspect of the embodiments of the present invention.

According to a third aspect of the present invention, there is provided a non-transitory computer-readable storage medium. Instructions in the storage medium, when executed by a processor of an electronic device, enable the electronic device to perform the method according to the first aspect of the embodiments of the present invention.

By adopting the method disclosed by the present invention, the application window type of the application program can be intelligently identified according to the importance degree of the application program, the target resource of the application program is determined according to the application window type, and the application program is run according to the target resource. The method schedules resources among the plurality of application programs according to the importance degrees of the application programs, so that problems such as the running lag caused by the resource competition among the plurality of application programs can be avoided, so as to improve the running smoothness of important application programs, and also ensure the overall smoothness of the plurality of application programs when they are run simultaneously, thus enhancing the user experience.

It is to be understood that both the foregoing general description and the following detailed description are illustrative and explanatory only, and are not restrictive of the present invention.

### BRIEF DESCRIPTION OF THE DRAWINGS

The accompanying drawings, which are incorporated in and constitute a part of this specification, illustrate embodiments consistent with the present invention and together with the description, serve to explain the principles of the present invention.
Fig. 1 is a flow chart of a method for running an application program according to an illustrative embodiment.
Fig. 2 is a flow chart of determining an application window type of each of a plurality of application programs currently run by an electronic device according to an illustrative embodiment.
Fig. 3 is a schematic display diagram of an application window according to an illustrative embodiment.
Fig. 4 is a schematic diagram of calculating a window coverage rate according to an illustrative embodiment.
Fig. 5 is a schematic display diagram of an application window according to an illustrative embodiment.
Fig. 6 is a flow chart of a method for running an application program according to an illustrative embodiment.
Fig. 7 is a schematic diagram showing a data packet processing sequence according to an illustrative embodiment.
Fig. 8 is a flow chart of a method for running an application program according to an illustrative embodiment.
Fig. 9 is a flow chart of a method for running an application program according to an illustrative embodiment.
Fig. 10 is a schematic wireframe of running an application program according to an illustrative embodiment.
Fig. 11 is a block diagram of an apparatus for running an application program according to an illustrative embodiment.
Fig. 12 is a block diagram of an electronic device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present invention. Rather, they are merely examples of apparatuses and methods consistent with some aspects of the present invention the scope of which is defined by the appended claims.

In some embodiments, in order to avoid a network resource competition among a plurality of application programs run simultaneously, a network rate limit is uniformly applied to application programs run in the background, that is, network rates of background application programs are limited to ensure the network experience of application programs run in the foreground. However, it is too simple to only control the network rates for the foreground application program and the background application program. If a plurality of application programs is run simultaneously in the foreground, there will still be the network resource competition problem among the foreground application programs, which will lead to network problems such as delay and bandwidth problems. Therefore, this control method is not suitable for a use scenario where the plurality of application programs is run simultaneously in the foreground. In addition, if there is a download task in the background, the user's download experience will be affected. Therefore, it is not suitable for some special scenarios to limit the network rate for all the background application programs. In summary, this control method is not smart, and will still affect the user's network experience.

In an illustrative embodiment of the present invention, in order to overcome the resource competition problem among a plurality of application programs run simultaneously in the related art, a method for running an application program is provided, which includes: determining an application window type of each of a plurality of application programs currently run by an electronic device, in which the application window type is used to represent an importance degree of the application program; determining a target resource of the application program according to the application window type of the application program; and running the application program according to the target resource of the application program. The method schedules resources among the plurality of application programs according to the importance degrees of the application programs, which can avoid problems such as a running lag caused by the resource competition among the plurality of application programs, so as to improve the running smoothness of important application programs, and also ensure the overall smoothness of the plurality of application programs when they are run simultaneously, thus enhancing the user experience.

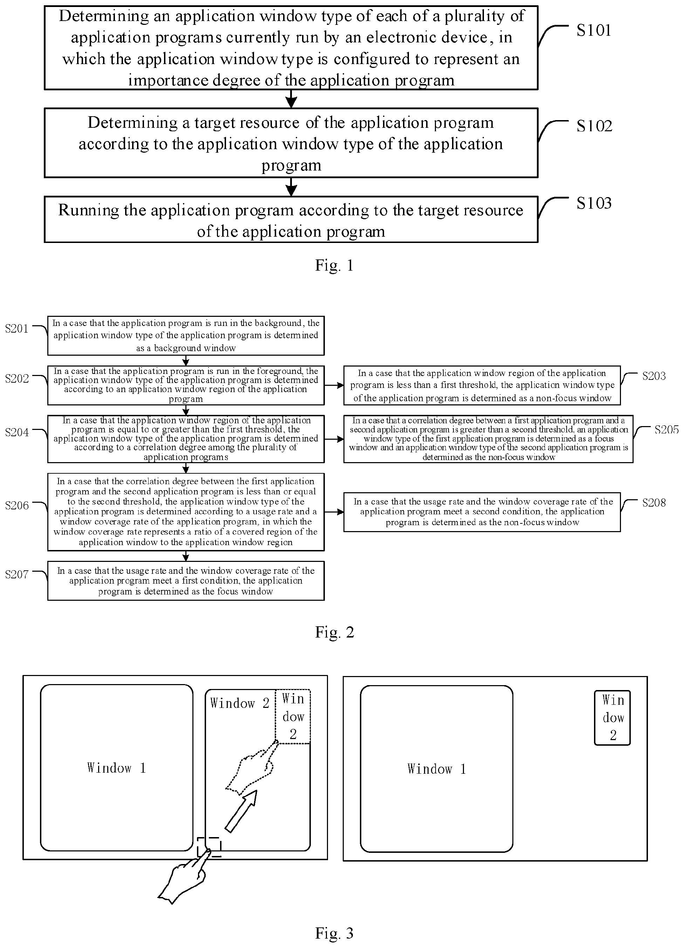

Fig. 1 is a flow chart of a method for running an application program according to an illustrative embodiment. As shown in Fig. 1, the method includes the following steps.

In step S 101, an application window type of each of a plurality of application programs currently run by an electronic device is determined, and the application window type is configured to represent an importance degree of the application program.

In step S102, a target resource of the application program is determined according to the application window type of the application program.

In step S103, the application program is run according to the target resource of the application program.

The method may be applied to the electronic device, including a smart phone, a tablet computer, a personal computer, a smart screen, a smart car machine and other electronic devices with the function of running a plurality of application programs simultaneously.

In step S101, the plurality of application programs currently run by the electronic device includes an application program run in the foreground and an application program run in the background, and there may be one or more application programs run in the foreground. An application window is a display window of the application program. A display mode of the foreground application window may include a small window, such as a free small window, a mini small window, a side small window, etc., or include full-screen multiple windows, such as parallel windows of split screens in the application program, multi-application split screen windows, etc. A display mode of the background application window is the same as the foreground display mode before switching to the background display or is unified as a default display mode. According to the importance degrees of the application programs, the application window is divided into a plurality of application window types, and different application window types represent different importance degrees.

In some embodiments, the application window types may be classified according to the application programs' own attributes. For example, according to the delay sensitivity of the application programs, the application window type of a game application program with a high delay sensitivity may be classified as an important type, and the application window type of a social application program with a low delay sensitivity may be classified as unimportant type. Or, according to the bandwidth requirements of the application programs, the application window type of the application program performing a data download task or a data upload task may be classified as an important type, and the application window types of other application programs may be classified as unimportant types. Or, according to user behaviors, for example, the application program that is being operated by the user is classified as an important type, or the application program with the largest display region area of the application window is classified as an important type, or the application that is used by the user most frequently is classified as an important type, and other application programs are classified as unimportant types. The application window types may also be classified according to the application programs' own attributes and the user behaviors.

In step S102, the target resource includes network resources, and may also include cache resources, computing resources, etc. In the embodiment of the present invention, the network resources include a network rate, a data packet processing priority, a frame rate, a resolution, etc. Different application window types correspond to different target resources. As the importance degrees of the application programs decrease in sequence, the amounts of the target resources decrease in sequence to ensure the running smoothness of important application programs. For example, the network rate of the application program of the important type is higher than the network rate of the application program of the unimportant type, or data packets of the application program of the important type are forwarded preferentially, or the frame rate of the application program of the important type is higher than the frame rate of the application program of the unimportant type.

In step S103, each application program is run according to the target resource allocated to each application program, which can avoid the resource competition problem among the plurality of application programs and ensure the running smoothness of the plurality of application programs run simultaneously to the greatest extent.

In an illustrative embodiment of the present invention, the application window type of the application program is intelligently identified according to the importance degree of the application program, the target resource of the application program is determined according to the application window type, and the application program is run according to the target resource. This method schedules resources among the plurality of application programs according to the importance degrees of the application programs, which can avoid problems such as the running lag caused by the resource competition among the plurality of application programs, thus improving the running smoothness of the important application programs, and ensuring the overall smoothness of the plurality of application programs when they are run simultaneously.

Fig. 2 is a flow chart for determining an application window type of each of a plurality of application programs currently run by an electronic device according to an illustrative embodiment. As shown in Fig. 2, the method includes the following steps.

In step S201, in a case that the application program is run in the background, the application window type of the application program is determined as a background window.

In step S202, in a case that the application program is run in the foreground, the application window type of the application program is determined according to an application window region of the application program.

In step S203, in a case that the application window region of the application program is less than a first threshold, the application window type of the application program is determined as a non-focus window.

In step S204, in a case that the application window region of the application program is equal to or greater than the first threshold, the application window type of the application program is determined according to a correlation degree among the plurality of application programs.

In step S205, in a case that a correlation degree between a first application program and a second application program is greater than a second threshold, an application window type of the first application program is determined as a focus window and an application window type of the second application program is determined as the non-focus window.

In step S206, in a case that the correlation degree between the first application program and the second application program is less than or equal to the second threshold, the application window type of the application program is determined according to a usage rate and a window coverage rate of the application program, in which the window coverage rate represents a ratio of a covered portion of the application window region to the application window region.

In step S207, in a case that the usage rate and the window coverage rate of the application program meet a first condition, the application program is determined as the focus window.

In step S208, in a case that the usage rate and the window coverage rate of the application program meet a second condition, the application program is determined as the non-focus window.

In step S201-step S202, the importance degree of the application program run in the background is lower than the importance degree of the application program run in the foreground, and thus the application window type of the application program run in the background is classified the background window first, and then the application window type of the application program run in the foreground is further classified. For the application program run in the foreground, the application window region represents a display region in a display screen occupied by the application window, and an area size of the application window region may reflect whether the user wants to pay more attention to the application program. Therefore, according to the area size of the application window region of the application program, the application window type of the application program may be determined, so that the application window type of the foreground application program may be classified according to the user's attention degree.

In step S203-step S204, length and width dimensions of the application window region are determined by reading the coordinate information of the vertices of the application window region in the display screen, and then the area of the application window region is determined. In a case that the area of the application window region is less than the first threshold, it means that the application program is displayed in the mini small window and the application window type of the application program is determined as the non-focus window, that is, the user's attention degree is low. In a case that the area of the application window region is equal to or greater than the first threshold value, it means that the application program is displayed in a non-mini small window. At this time, in a case that the areas of the application window regions of multiple application programs are equal to or greater than the first threshold value, the application window types of the application programs are determined according to the correlation degree among the multiple application programs. The first threshold is an empirical value, which represents a critical value of a display region area of the mini small window. The correlation degree among the multiple application programs indicates a probability that the user pays attention to the multiple application programs at the same time. For example, in a case that the user often buys things while watching videos, the video application program and the shopping application program are highly correlated, or in a case that the user often uses the social application program while playing games, the game application program and the social application program are highly correlated.

In some embodiments, a user operation is monitored and the application window of the application program operated by the user is determined as the focus window.

Fig. 3 is a schematic display diagram of an application window according to an illustrative embodiment. As shown in Fig. 3, in a left image, a region area of application window 1 is larger than the first threshold, and a region area of application window 2 is larger than the first threshold. The user drags an edge of application window 2 in a dotted box in a direction of an arrow to reduce the application window. At this time, application window 2 is determined as the focus window, and when the region area of application window 2 is smaller than the first threshold during dragging, application window 2 remains as the focus window. In a right image after dragging is finished, the region area of application window 1 is larger than the first threshold, and the region area of application window 2 is smaller than the first threshold, that is, application window 2 is the mini small window. At this time, application window 1 is determined as the focus window and application window 2 is determined as the non-focus window.

Referring back to Fig. 2, in step S205-step S206, historical usage data of the application programs are obtained, and the correlation degree among the plurality of application programs are determined according to the historical usage data and a preset correlation degree prediction algorithm. In a case that the correlation degree between the first application program and the second application program is greater than the second threshold, the application window type of the first application program is classified as the focus window, and the application window type of the second application program is classified as the non-focus window. A user operation frequency of the first application is greater than a user operation frequency of the second application. For example, in a case that the correlation degree between the game application program and the social application program is greater than the second threshold and the user operation frequency of the game application program is greater than the user operation frequency of the social application program, the application window type of the game application program is classified as the focus window and the application window type of the social application program is classified as the non-focus windows.

In a case that the correlation degree between the first application program and the second application program is less than or equal to the second threshold, the application window type of the application program is determined according to the usage rate and the window coverage rate of the application program. The second threshold is an empirical value, for example, 80%. The usage rate of the application program indicates the historical usage frequency of the application program. The higher the usage rate, the higher the possibility of the user paying attention to the application program. The window coverage rate indicates the ratio of the covered portion of the application window region to the application window region, and the higher the coverage rate is, the less the application program is concerned. Therefore, according to the usage rate and the window coverage rate of the application program, the application window type of the foreground application program may be classified according to the attention degree of the user.

In step S207-step S208, the historical usage frequency of the application program is determined by a ratio of historical usage times of the application program to historical usage times of all application programs; the coordinate information of each vertex of the application window region of the application program in the display screen and the coordinate information of each vertex of an upper application window region covering this application window region in the display screen are obtained respectively, the dimension information is determined according to the coordinate information, then the area of the covered portion of the application window region and the area of the whole application window region are calculated respectively, and the ratio of the two areas is the coverage rate.

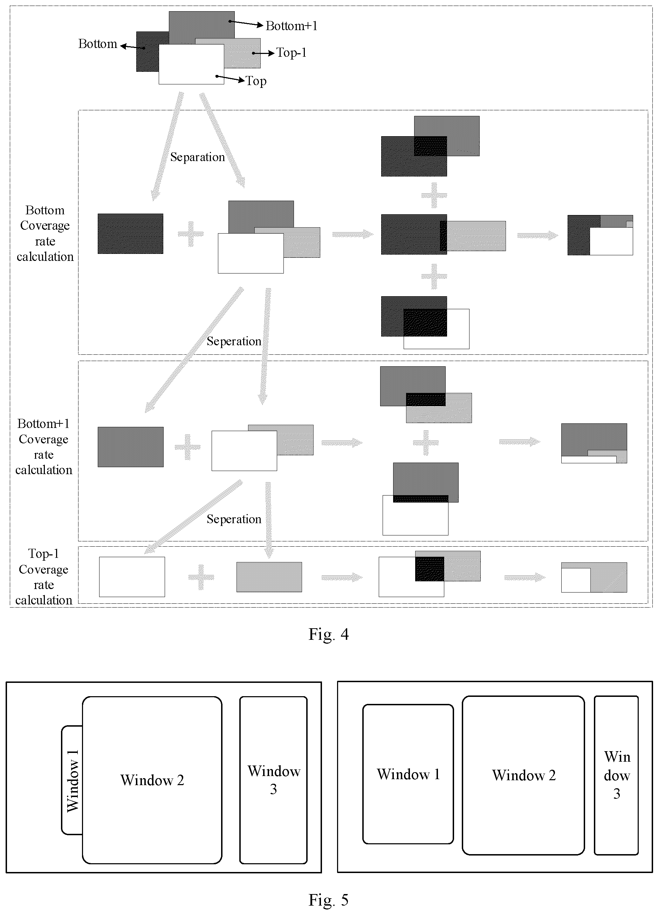

Fig. 4 is a schematic diagram of calculating a window coverage rate according to an illustrative embodiment. As shown in Fig. 4, there are four application programs whose application windows overlap each other in the foreground, the bottommost application window is labeled as Bottom, the penultimate application window is labeled as Bottom+ 1, the antepenultimate application window is labeled as Top-1, and the topmost application window is labeled as Top. First, Bottom is separated, and the window coverage rate of Bottom is calculated according to an overlapping area with other three application windows. Then, Bottom+1 is separated, and the window coverage rate of Bottom+1 is calculated according to an overlapping area with other two application windows. Then, Top-1 is separated, and the window coverage rate of Top-1 is calculated according to an overlapping area with Top.

According to the usage rate and the window coverage rate of the application program, the application program is scored, the first condition indicates that the score is greater than a third threshold, and the second condition indicates that the score is less than or equal to the third threshold. In a case that the usage rate and the window coverage rate of the application program meet the first condition, it means that the user's attention degree is high, and the application window type of the application program is determined as the focus window; in a case that the usage rate and the window coverage rate of the application program meet the second condition, it means that the user's attention degree is low, and the application window type of the application program is determined as the non-focus window. In an example, when the application programs are scored according to their usage rates and window coverage rates, the usage rates of all application programs are ranked in a descending order, and are assigned with different weights in sequence, and the sum of 1 -window coverage rate and the usage rate ranking weight is taken as the score of each application program.

In an example, assuming that the usage rates of application window 1, application window 2 and application window 3 are the same, Fig. 5 is a schematic display diagram of an application window according to an illustrative embodiment, and as shown in Fig. 5, in a left image, the coverage rate of application window 1 is high, and the coverage rates of application window 2 and application window 3 are both 0, so that application window 1 is a non-focus window, and application window 2 and application window 3 are focus windows. In a right image, the coverage rates of application window 1, application window 2 and application window 3 are all 0, so that application window 1, application window 2 and application window 3 are all focus windows.

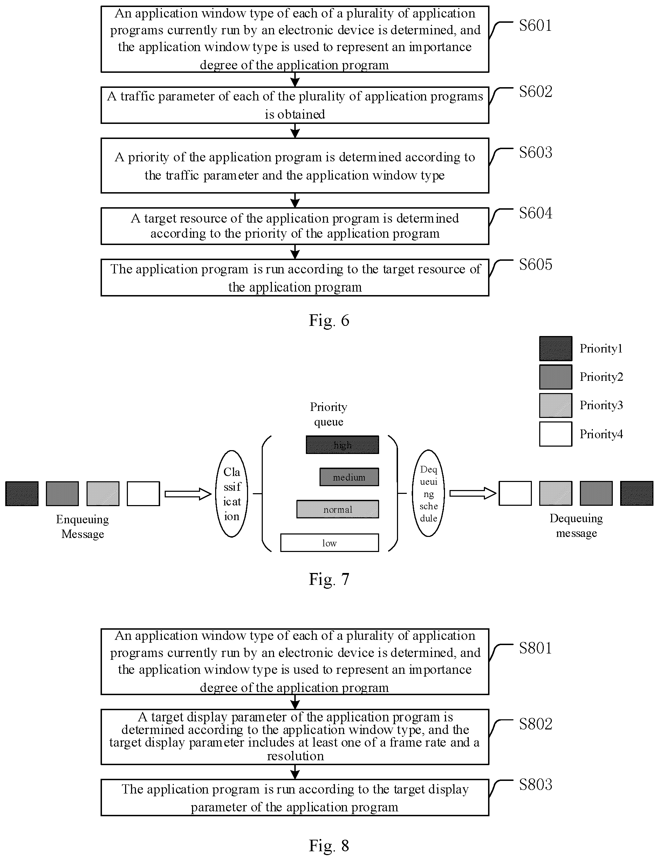

Fig. 6 is a flow chart of a method for running an application program according to an illustrative embodiment. As shown in Fig. 6, the method includes the following steps.

In step S601, an application window type of each of a plurality of application programs currently run by an electronic device is determined, and the application window type is used to represent an importance degree of the application program.

In step S602, a traffic parameter of each of the plurality of application programs is obtained.

In step S603, a priority of the application program is determined according to the traffic parameter and the application window type.

In step S604, a target resource of the application program is determined according to the priority of the application program.

In step S605, the application program is run according to the target resource of the application program.

The specific implementations of steps S601 and S605 can be found in steps S101 and S 103, and will not be repeated here.

In step S602, the traffic parameter indicates a size of a traffic data stream of the socket communication, including an uplink traffic data stream and a downlink traffic data stream, and the traffic parameter of each application program is monitored and recorded in real time.

In step S603, the traffic parameter may represent a traffic demand of the application program, the application window type may represent the importance degree of the application program, and the priority of the application program is determined in combination with the traffic demand and the importance degree.

In some embodiments, the priorities of the application programs are classified into a first priority Priority 1, a second priority Priority2, a third priority Priority3 and a fourth priority Priority4 in a following manner.

In a case that the application window type is the focus window, a key business in the application program is determined as the first priority Priority1, and a non-key business in the application program is determined as the second priority Priority2.

In a case that the application window type is the non-focus window and the traffic parameter is less than a traffic threshold, all businesses in the application program are determined as the second priority Priority2.

In a case that the application window type is the background window and the traffic parameter is less than the traffic threshold, the key business in the application program is determined as the third priority Priority3 and the non-key business in the application program is determined as the fourth priority Priority4.

In a case that the application window type is the non-focus window or the background window, and the traffic parameter is greater than or equal to the traffic threshold, all businesses in the application program are determined as the fourth priority Priority4.

The key business in the application program includes a specific port 53 and a protocol TCP SYN, the port 53 is a DNS port for domain name resolution, the protocol TCP SYN is a SYN flag for initiating a connection establishment request in a transmission control protocol, and other important businesses are also included. The key business and the non-key business of each application program are preset parameters. The traffic threshold of the traffic parameter is a preset value, and the traffic threshold may be an uplink traffic threshold, a downlink traffic threshold, or a total traffic threshold. In this embodiment, the traffic threshold includes the uplink traffic threshold and the downlink traffic threshold. When the uplink traffic parameter is less than the uplink traffic threshold and the downlink traffic parameter is less than the downlink traffic threshold, it is determined that the traffic parameter is less than the traffic threshold. When the uplink traffic parameter greater than or equal to the uplink traffic threshold or the downlink traffic parameter greater than or equal to the downlink traffic threshold, it is determined that the traffic parameter is greater than or equal to the traffic threshold.

In step S604, the target resource includes at least one of a data packet processing priority and a target network rate of the application program. A corresponding relationship between the priority and the target resource is pre-stored in the electronic device. The higher the priority of the application program, the larger the amount of the target resource, that is, the higher the data packet processing priority of the application program and/or the higher the network rate of the application program. After the priority of the application program is determined, the target resource of the application program is matched from the corresponding relationship.

In some embodiments, the corresponding relationship between the priority of the application program and the data packet processing priority of the application program is as follows:
in a case that the priority of the application program is Priority1, the data packet processing priority of the application program is determined to be high;
in a case that the priority of the application program is Priority2, the data packet processing priority of the application program is determined to be medium;
in a case that the priority of the application program is Priority3, the data packet processing priority of the application program is determined to be normal;
in a case that the priority of the application program is Priority4, the data packet processing priority of the application program is determined to be low;
high>medium>normal>low.

After the priority of the application program is determined, the data packet processing priority is matched from the above corresponding relationship.

Fig. 7 is a schematic diagram showing a data packet processing sequence according to an illustrative embodiment. As shown in Fig. 7, messages are identified by the priorities of the application programs corresponding to the messages, and the messages are arranged in a chronological order as follows: Priority4, Priority3, Priority2 and Priority1, when they are enqueued. In a case that the messages are classified in sequence and put into a data packet processing priority queue, an arrangement order of the messages is: Priority1, Priority2, Priority3, Priority4, when they are dequeued.

In some embodiments, the corresponding relationship between the priority of the application program and the target network rate of the application program is as follows:
in a case that the priority of the application program is Priority1, the target network rate of the application program is determined as a;
in a case that the priority of the application program is Priority2, the target network rate of the application program is determined as b;
in a case that the priority of the application program is Priority3, the target network rate of the application program is determined as c;
in a case that the priority of the application program is Priority4, the target network rate of the application program is determined as d;
a>b>c>d.

After the priority of application program is determined, the target network rate is matched from the above corresponding relationship.

In some embodiments, in a case that the application program is a video application program and the priority of the application program is a high priority, data is preloaded in the application program, that is, the video data is preloaded locally before the video is played, so as to ensure the smoothness of playing the video.

In this embodiment, the data packet of the application program with the high priority is preferentially processed, and/or the network rate of the application program with the high priority is high, so that the running smoothness of the application program with the high priority can be ensured.

Fig. 8 is a flow chart of a method for running an application program according to an illustrative embodiment. As shown in Fig. 8, the method includes the following steps.

In step S801, an application window type of each of a plurality of application programs currently run by an electronic device is determined, and the application window type is used to represent an importance degree of the application program.

In step S802, a target display parameter of the application program is determined according to the application window type, and the target display parameter includes at least one of a frame rate and a resolution.

In step S803, the application program is run according to the target display parameter of the application program.

The specific implementations of steps S801 and S803 can be found in steps S101 and S 103, and will not be repeated here.

In step S802, the target resource includes the target display parameter, and the target display parameter includes at least one of the frame rate and the resolution. A corresponding relationship between the application window type and the target display parameter is pre-stored in the electronic device. The more important the application program is, the larger the target display parameter is, that is, the higher the frame rate is and/or the higher the resolution is. After the application window type of the application program is determined, the target display parameter of the application program is matched from the corresponding relationship.

In some embodiments, the corresponding relationship between the application window type of the application program and the target display parameter of the application program is as follows:
in a case that the application window type is the focus window, the target display parameter is determined as a first display parameter;
in a case that the application window type is the non-focus window, the target display parameter is determined as a second display parameter;
in a case that the application window type is the background window, the target display parameter is determined as a third display parameter;
the first display parameter>the second display parameter>the third display parameter.

In an example, taking the frame rate as an example, the frame rates of application window 1 and application window 2 in the left image of Fig. 3 are both 120Hz, and the frame rate of application window 2 is always 120Hz during dragging, while the frame rate of application window 1 is 120Hz and the frame rate of application window 2 is 30Hz in the right image. The frame rate of application window 1 is 30Hz, and the frame rates of application window 2 and application window 3 are 30Hz in the left image of Fig. 5, while the frame rates of application window 1, application window 2 and application window 3 are all 120Hz in the right image of Fig. 5.

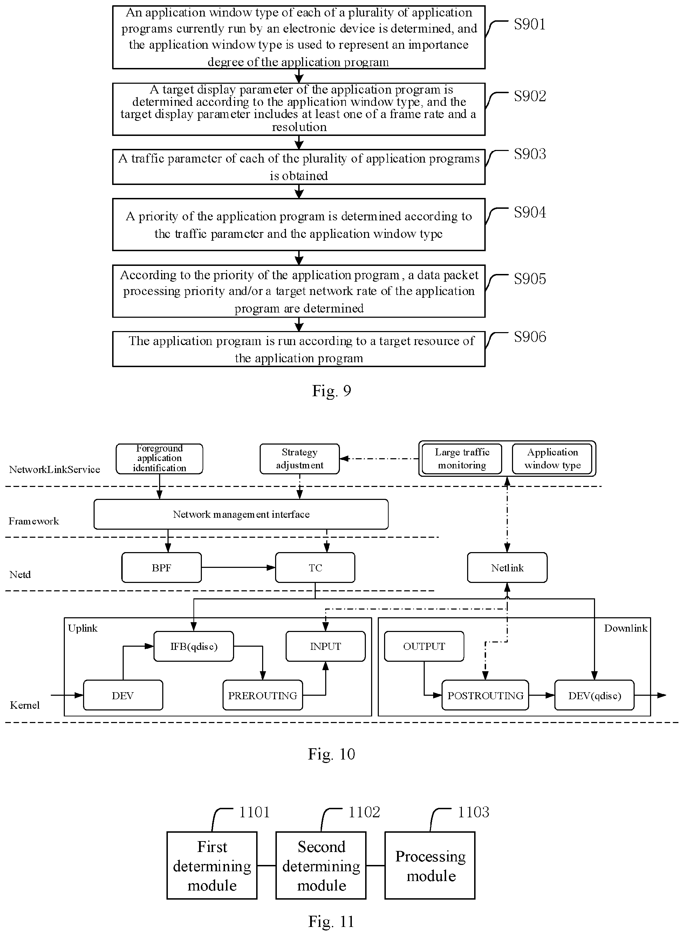

Fig. 9 is a flow chart of a method for running an application program according to an illustrative embodiment. As shown in Fig. 9, the method includes the following steps.

In step S901, an application window type of each of a plurality of application programs currently run by an electronic device is determined, and the application window type is used to represent an importance degree of the application program.

In step S902, a target display parameter of the application program is determined according to the application window type, and the target display parameter includes at least one of a frame rate and a resolution.

In step S903, a traffic parameter of each of the plurality of application programs is obtained.

In step S904, a priority of the application program is determined according to the traffic parameter and the application window type.

In step S905, according to the priority of the application program, a data packet processing priority and/or a target network rate of the application program are determined.

In step S906, the application program is run according to a target resource of the application program.

The specific implementations of steps S901-S902 can be found in steps S801-S802, and the specific implementations of steps S903-S906 can be found in steps S602-S605, which will not be repeated here.

Fig. 10 is a schematic wireframe of running an application program according to an illustrative embodiment. As shown in Fig. 10, INPUT and POSTROUTTING are registered through a message processing framework Netfilter in a Kernel layer, which are used for counting a downlink traffic data stream and an uplink traffic data stream respectively, and compare the downlink traffic data stream and the uplink traffic data stream with a downlink traffic threshold and an uplink traffic threshold respectively. When a large traffic data stream is detected, that is, when the downlink traffic data stream is greater than the downlink traffic threshold and/or the uplink traffic data stream is greater than the uplink traffic threshold, the large traffic data stream is reported to a NetworkLinkService layer through a Netlink of a Netd layer, and the NetworkLinkService layer adjusts a network resource allocation strategy according to a large traffic monitoring result and the application window type, and determines a target allocation strategy of network resources, that is, determines a priority queue qdisc of the application programs. Moreover, all application programs run in the foreground and in the background are identified, and an identification (uid) of each application program is obtained. Through a network management interface of a Framework layer, a Berkeley packet filter (BPF) of the Netd layer is called to capture the data packet of each application program, and a traffic control (TC) of the Netd layer is called to control an uplink data packet and a downlink data packet of each application program according to the priority queue qdisc, that is, control the data packet processing priority and the network rate.

Fig. 11 is a block diagram of an apparatus for running an application program according to an illustrative embodiment, and as shown in Fig. 11, the apparatus includes: a first determining module 1101 configured to determine an application window type of each of a plurality of application programs currently run by an electronic device, in which the application window type is used to represent an importance degree of the application program; a second determining module 1102 configured to determine a target resource of the application program according to the application window type of the application program; and a processing module 1103 configured to run the application program according to the target resource of the application program.

In an illustrative embodiment, the second determining module 1102 is further configured to: acquire a traffic parameter of each of the plurality of application programs; determine a priority of the application programs according to the traffic parameter and the application window type; and determine a target resource of the application program according to the priority of the application program.

In an illustrative embodiment, the second determining module 1102 is further configured to: determine a key business in the application program as a first priority and a non-key business in the application program as a second priority, in a case that the application window type is a focus window; determine all businesses in the application program as the second priority in a case that the application window type is a non-focus window and the traffic parameter is less than a traffic threshold; determine the key business in the application program as a third priority and the non-key business in the application program as a fourth priority, in a case that the application window type is a background window and the traffic parameter is less than the traffic threshold; and determine all businesses in the application program as the fourth priority, in a case that the application window type is the non-focus window or the background window, and the traffic parameter is greater than or equal to the traffic threshold.

In an illustrative embodiment, the second determining module 1102 is further configured to: determine a data packet processing priority and/or a target network rate of the application program according to the priority of the application program. The higher the priority of the application program, the higher the data packet processing priority of the application program and/or the larger the target network rate of the application program.

In an illustrative embodiment, the second determining module 1102 is further configured to: preload data in the application program in a case that the application program is a video application program and the priority of the application program is a high priority.

In an illustrative embodiment, determining the target resource of the application program according to the application window type of the application program includes: determining a target display parameter of the application program according to the application window type. The target display parameter includes at least one of a frame rate and a resolution.

In an illustrative embodiment, the second determining module 1102 is further configured to: determine the target display parameter as a first display parameter in a case that the application window type is the focus window; determine the target display parameter as a second display parameter in a case that the application window type is the non-focus window; and determine the target display parameter as a third display parameter in a case that the application window type is the background window. The first display parameter, the second display parameter and the third display parameter decrease in sequence.

In an illustrative embodiment, the first determining module 1101 is further configured to: determine the application window type of the application program according to an application window region of the application program in a case that the application program is run in the foreground; and determine the application window type of the application program as the background window in a case that the application program is run in the background.

In an illustrative embodiment, the first determining module 1101 is further configured to: determine the application window type of the application program as the non-focus window in a case that the application window region of the application program is less than a first threshold; and determine the application window type of the application program according to a correlation degree among the plurality of application programs in a case that the application window region of the application program is equal to or greater than the first threshold.

In an illustrative embodiment, the first determining module 1101 is further configured to: in a case that the correlation degree between a first application program and a second application program is greater than a second threshold, determine an application window type of the first application program as the focus window and an application window type of the second application program as the non-focus window; and in a case that the correlation degree between the first application program and the second application program is less than or equal to the second threshold, determine the application window type of the application program according to a usage rate and a window coverage rate of the application program. The window coverage rate indicates a ratio of a covered portion of the application window region to the application window region.

In an illustrative embodiment, the first determining module 1101 is further configured to: determine the application window type of the application program as the focus window in a case that the usage rate and the window coverage rate of the application program meet a first condition; and determine the application window type of the application program as the non-focus window in a case that the usage rate and the window coverage rate of the application program meet a second condition.

With regard to the apparatus in the above embodiment, the specific way in which each module performs operations has been described in detail in the embodiments of the methods, and will not be repeated here.

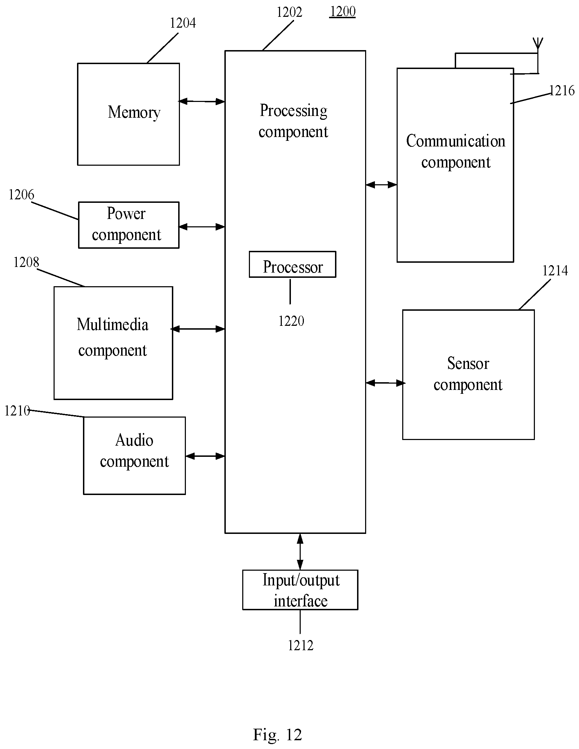

Fig. 12 is a block diagram of an electronic device 1200 according to an illustrative embodiment.

Referring to Fig. 12, the electronic device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operation of the electronic device 1200, such as operations associated with display, telephone call, data communication, camera operation and recording operation. The processing component 1202 may include one or more processors 1220 to execute instructions to complete all or part of the steps of the methods described above. In addition, the processing component 1202 can include one or more modules to facilitate interaction between the processing component 1202 and other components. For example, the processing component 1202 can include a multimedia module to facilitate interaction between the multimedia component 1208 and the processing component 1202.

The memory 1204 is configured to store various types of data to support operations in the electronic device 1200. Examples of these data include instructions for any application program or method operating on the electronic device 1200, contact data, phone book data, messages, pictures, videos, and the like. The memory 1204 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1206 provides power for various components of the electronic device 1200. The power component 1206 may include a power management system, one or more power supplies, and other components associated with generating, managing and distributing power for the electronic device 1200.

The multimedia component 1208 includes a screen that provides an output interface between the electronic device 1200 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 1208 includes a front camera and/or a rear camera. When the electronic device 1200 is in an operation mode, such as a shooting mode or a video mode, the front camera and/or the rear camera can receive external multimedia data. Each of the front camera and the rear camera may be a fixed optical lens system or have a focal length and an optical zoom capability.

The audio component 1210 is configured to output and/or input audio signals. For example, the audio component 1210 includes a microphone (MIC) configured to receive external audio signals when the electronic device 1200 is in operation modes, such as a call mode, a recording mode and a voice recognition mode. The received audio signal may be further stored in the memory 1204 or transmitted via the communication component 1216. In some embodiments, the audio component 1210 further includes a speaker for outputting audio signals.

The I/O interface 1212 provides an interface between the processing component 1202 and peripheral interface modules, which may be keyboards, clickwheels, buttons, etc. These buttons may include, but are not limited to, a home button, a volume button, a start button and a lock button.

The sensor component 1214 includes one or more sensors for providing various aspects of status assessments for the electronic device 1200. For example, the sensor component 1214 may detect an on/off state of the electronic device 1200, the relative positioning of components, such as a display and a keypad of the electronic device 1200, the position change of the electronic device 1200 or a component of the electronic device 1200, the presence or absence of contact between the user and the electronic device 1200, the orientation or acceleration/deceleration of the electronic device 1200 and the temperature change of the electronic device 1200. The sensor assembly 1214 may include a proximity sensor configured to detect the presence of a nearby object without any physical contact. The sensor assembly 1214 may also include an optical sensor, such as a CMOS or CCD image sensor, for use in imaging applications. In some embodiments, the sensor assembly 1214 may further include an acceleration sensor, a gyro sensor, a magnetic sensor, a pressure sensor or a temperature sensor.

The communication component 1216 is configured to facilitate wired or wireless communication between the electronic device 1200 and other devices. The electronic device 1200 may access a wireless network based on communication standards, such as WiFi, 2G or 3G, or a combination thereof. In an illustrative embodiment, the communication component 1216 receives a broadcast signal or broadcast related information from an external broadcast management system via a broadcast channel. In an illustrative embodiment, the communication component 1216 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the electronic device 1200 may be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors or other electronic components, for performing the above methods.

In an illustrative embodiment, there is also provided a non-transitory computer-readable storage medium including instructions, such as the memory 1204 including instructions, which can be executed by the processor 1220 of the electronic device 1200 to complete the above methods. For example, the non-transitory computer-readable storage medium may be a ROM, a random access memory (RAM), a CD-ROM, a magnetic tape, a floppy disk, an optical data storage device, etc.

A non-transitory computer-readable storage medium is provided. An electronic device is enabled to execute a method for running an application program when instructions in the storage medium are executed by a processor of the electronic device, and the method includes any one of the above methods.

## Claims

1. A method for running an application program, comprising:
determining (S101, S601, S801, S901) an application window type of each of a plurality of application programs currently run by an electronic device (1300), wherein the application window type is configured to represent an importance degree of the application program;
determining (S102) a target resource of the application program according to the application window type of the application program; and
running (S103, S605, S906) the application program according to the target resource of the application program.

2. The method for running the application program according to claim 1, wherein determining (S102) the target resource of the application program according to the application window type comprises:
acquiring (S602, S903) a traffic parameter of each of the plurality of application programs;
determining (S603, S904) a priority of the application program according to the traffic parameter and the application window type; and
determining (S604) the target resource of the application program according to the priority of the application program.

3. The method for running the application program according to claim 2, wherein determining (S603, S904) the priority of the application program according to the traffic parameter and the application window type comprises:
determining a key business in the application program as a first priority and a non-key business in the application program as a second priority, in a case that the application window type is a focus window;
determining all businesses in the application program as the second priority, in a case that the application window type is a non-focus window and the traffic parameter is less than a traffic threshold;
determining the key business in the application program as a third priority and the non-key business in the application program as a fourth priority, in a case that the application window type is a background window and the traffic parameter is less than the traffic threshold; and
determining all businesses in the application program as the fourth priority, in a case that the application window type is the non-focus window or the background window, and the traffic parameter is greater than or equal to the traffic threshold.

4. The method for running the application program according to claim 2 or 3, wherein determining (S604) the target resource of the application program according to the priority of the application program comprises:
determining (S905) a data packet processing priority of the application program and/or a target network rate of the application program according to the priority of the application program,
wherein the higher the priority of the application program, the higher the data packet processing priority of the application program and/or the target network rate of the application program.

5. The method for running the application program according to any one of claims 2-4, wherein determining (S604) the target resource of the application program according to the priority of the application program comprises:
preloading data in the application program, in a case that the application program is a video application program and the priority of the application program is a high priority.

6. The method for running the application program according to any one of claims 1-5, wherein determining (S102) the target resource of the application program according to the application window type of the application program comprises:
determining (S802, S902) a target display parameter of the application program according to the application window type, wherein the target display parameter comprises at least one of a frame rate and a resolution.

7. The method for running the application program according to claim 6, wherein determining (S802, S902) the target display parameter of the application program according to the application window type comprises:
determining the target display parameter as a first display parameter in a case that the application window type is a focus window;
determining the target display parameter as a second display parameter in a case that the application window type is a non-focus window; and
determining the target display parameter as a third display parameter in a case that the application window type is a background window,
wherein the first display parameter, the second display parameter and the third display parameter decrease in sequence.

8. The method for running the application program according to any one of claims 1-7, wherein determining (S101) the application window type of each of the plurality of application programs currently run by the electronic device comprises:
determining (S202) the application window type of the application program according to an application window region of the application program, in a case that the application program is run in the foreground; and
determining (S201) the application window type of the application program as a background window, in a case that the application program is run in the background.

9. The method for running the application program according to claim 8, wherein determining the application window type of the application program according to the application window region of the application program comprises:
determining (S203) that the application window type of the application program as a non-focus window, in a case that the application window region of the application program is less than a first threshold; and
determining (S204) the application window type of the application program according to a correlation degree among the plurality of application programs, in a case that the application window region of the application program is equal to or greater than the first threshold.

10. The method for running the application program according to claim 9, wherein length and width dimensions of the application window region are determined by reading coordinate information of vertices of the application window region in a display screen, and an area of the application window region is determined,
wherein in a case that the area of the application window region is less than the first threshold, the application window type of the application program is determined as the non-focus window, and
in a case that the area of the application window region is equal to or greater than the first threshold value, the application window type of the application program is determined according to the correlation degree among the plurality of application programs.

11. The method for running the application program according to claim 9 or 10, wherein determining the application window type of the application program according to the correlation degree among the plurality of the application programs comprises:
in a case that a correlation degree between a first application program and a second application program is greater than a second threshold, determining (S205) an application window type of the first application program as a focus window and an application window type of the second application program as a non-focus window; and
in a case that the correlation degree between the first application program and the second application program is less than or equal to the second threshold, determining (S206) the application window type of the application program according to a usage rate and a window coverage rate of the application program,
wherein the window coverage rate represents a ratio of a covered portion of the application window region to the application window region.

12. The method for running the application program according to claim 11, wherein historical usage data of the application programs are obtained, and the correlation degree among the plurality of application programs are determined according to the historical usage data and a preset correlation degree prediction algorithm.

13. The method for running the application program according to claim 11 or 12, wherein determining the application window type of the application program according to the usage rate and the window coverage rate of the application program comprises:
determining (S207) the application window type of the application program as the focus window, in a case that the usage rate and the window coverage rate of the application program meet a first condition; and
determining (S208) the application window type of the application program as the non-focus window, in a case that the usage rate and the window coverage rate of the application program meet a second condition.

14. An electronic device (1200), comprising:
a processor (1220); and
a memory (1204) for storing instructions executable by the processor (1220),
wherein the processor (1220) is configured to perform a method according to any one of claims 1-13.

15. A non-transitory computer-readable storage medium, wherein instructions in the storage medium, when executed by a processor (1220) of an electronic device (1200), enable the electronic device (1200) to perform a method according to any one of claims 1-13.
